# EUROPEAN PATENT APPLICATION

(11) **EP 0 681 262 A1**
(43) Date of publication of application: **08.11.1995**
(21) Application number: 94303179.9
(22) Date of filing: 03.05.1994
(51) Int. Cl.: G06K 15/12, G06K 1/12, G09G 3/00

(54) **Method for producing micro indicia used for marking personal property**

(71) Applicant: Loving, Charles Dennis, Stanbury Park, Utah (US); ALPHA DOT (EUROPE) LTD, St Albans, Hertfordshire AL3 5QU (GB)
(72) Inventor: Loving, Charles Dennis, Stanbury Park, Utah (US)
(74) Representative: Heath, Peter William Murray

(57) **Abstract**

Method for enabling a user to mark items of personal property with a plurality of near-microscopic tag particles (10), each tag particle including at least one complete serial number (14) thereon. The user operates a computer (16) to generate a serial number which is repeated a plurality of times to form an indicia as an optical display (17). The optical display is optically reduced by a reduction lens system (38) and captured on film. The film is developed and cut into a plurality of tag particles with each tag particle having at least one complete serial number thereon. The user is then able to selectively mark items of personal property using the tag particles thus produced.

## Description

This invention relates to identification systems and, more particularly, to a novel apparatus and method for enabling a person to mark items of personal property by selectively producing a personalized set of tag particles, each tag particle in the set having a preselected serial number thereon to provide an identification system for the items of personal property.

The proper identification of personal property is important to prove ownership in the event of inadvertent misplacement or loss of the personal property through unlawful activity such as theft. The return of the item of personal property recovered by law enforcement agencies requires accurate identification of the property to assure that the correct owner of the property receives the correct item of personal property. This problem is significant even where the particular item of personal property is visibly marked with a serial number or such other device since owners rarely properly record serial numbers of person property.

Another method for marking an item of personal property involves physically marking the item with an indelible mark applying a decal or by engraving a mark on the item. Each of the foregoing techniques for property identification can be circumvented, for example, by the simple removal or replacement of the decal with another decal. Erasure or otherwise obliteration of other forms of property identification is also a common practice.

The foregoing problems are generally the result of the unlawful activities such as theft and the like. In particular, it is a common practice for criminals to remove serial number plates and decals and even replace them with counterfeit or legitimate serial numbers taken from other articles of equipment. The primary purpose of this activity is to enable the criminal to sell or otherwise exchange the item for either money or other items of value. The altered serial number conceals the origin and ownership of the property thereby enabling the criminal to more readily dispose of the property for a greater amount of value.

Identification tags, per se, are well known for numerous items as a means for identifying the proper ownership of the item. Possibly the most widely known system for identification is the automobile license plate which is attached to the automobile. Unfortunately, automobile theft is accompanied by replacement of the license plate with a license plate obtained from another source. This practice is possible because, at most, only two, fairly large size license plates are affixed to the automobile. To counter this problem, it has become a requirement that certain major components of an automobile must be marked with what is referred to in the industry as a VIN (Vehicle Identification Number).

However, if one were to think in terms of hundreds of microscopic license plates or VIN's that are concealed at numerous locations in and on the item, it becomes readily apparent that the removal of all these license plates or VIN's is virtually impossible. Clearly, a few are easily removed, but in the absence of a complete disassembly and thorough cleaning of each disassembled part prior to reassembly, it is nearly impossible to remove all the identification devices from the article.

One such identification system is shown in the patent of Dillon (U.S. Patent No. 4,143,734) wherein a plurality of micro dots are produced by photoreduction techniques. In particular, the method consists essentially of printing the indicia in multiple units on a large plate with the images being reduced in size by step photographic process. The result is a glass slide having the negative of the image developed thereon. The image is then transferred photographically to a piece of film of the same size as the glass slide. The film is then cut into the individual micro dots. The micro dots are immersed in a carrier fluid which is used as the vehicle to apply the micro dots to the item to be marked.

An optically coded identification india system for marking an item of personal property is disclosed in the patent of Richardson (U.S. Patent No. 4,239,261). The labels are formed from a thin microsized plate of generally transparent material having the marking indicia thereon. The indicia is optically coded with a digital bit of data.

A document identification system for authenticating a document is disclosed in the patent of Knop (U.S. Patent No. 4,661,983) as a random-pattern of microscopic lines that inherently forms in a dielectric coating layer of a three-layer diffractive subtractive filter. An authenticating device permits identification of a genuine document by comparing read-out-line-position information derived by microscopic inspection with read-out digital codes of line information obtained earlier at the time of fabrication of the document.

One specific identification system designed for identifying the source of a particular product involves the use of color-coded microspheres. In the case of explosives, the color-coded microspheres are blended into the explosive during manufacture. Enough of the microspheres survive the by detonation of the explosive so as to enable the appropriate police agencies to identify the source of that particular explosive composition. In this example, the number of color-codings available to the manufacture are fairly limited. Further, it would be desirable to mark each item, even every stick of dynamite, for example, with its own specific identity that would not be destroyed by the detonation process.

In view of the foregoing, it would be an advancement in the art to provide a novel apparatus and method for enabling a person to mark an item of personal property by selectively producing an identification system whereby items of personal property are marked with a plurality of tag particles, each tag particle having a customized serial number. It would also be a significant advancement in the art to provide a novel apparatus and method whereby the person is able to selectively determine the specific serial number to be used on the tag particles. The novel tag particles are easily produced using readily available materials and equipment. Such a novel apparatus and method is disclosed and claimed herein.

This invention is a novel apparatus and method for enabling a customer to select a unique serial number which can then be replicated on a plurality of tag particles that can be used to tag items of personal property. The serial number on each tag particle is selectively predetermined from available serial numbers. An identification set is prepared with a plurality of tag particles with each tag particle having at least one complete serial number. The customer selectively predetermines the serial number using a computer, and the computer compares the selected serial number for availability. If available, the serial number is reserved for that specific customer while the computer renders it unavailable for all other customers. The computer also registers the specific serial number to the customer for future reference. The serial number is replicated in a plurality directly on a photographic film substrate through an optical reduction of the replicated serial number displayed on a computer screen. The film substrate is cut into a plurality of tag particles, each tag particle having at least one complete serial number. Each tag particle is smaller than about one millimeter in diameter so as to accommodate being discretely placed in joints, openings, or other unobtrusive places on the item of personal property. Adhesive is applied to the item to secure the tag particles dispensed thereon as a dusting of tag particles. The tag particles are recoverable and readable under magnification to reveal the particular serial number which can then be coordinated with the lawful owner of the item of personal property. It is, therefore, a primary object of this invention to provide a novel identification apparatus whereby a customer can mark items of personal property using a plurality of small tag particles that can be produced rapidly and inexpensively with each tag particle in the set having a predetermined, personalized serial number thereon to indicate that each tag particle came from the same set of tag particles.

Another object of this invention is to provide improvements in the method of enabling a customer in marking an item of personal property by providing the customer with a plurality of tag particles, each tag particle containing thereon an identical serial number that has been preselected by the customer.

Another object of this invention is to provide a customer with an apparatus for producing a plurality of personalized tag particles that can be used to mark an item of personal property by being affixed to the item at various discrete places within and on the item so as to be unobtrusive and not interfere with the aesthetic appearance of the item while at the same time essentially precluding removal of all of the tag particles.

Another object of this invention is to provide the customer access to a computer and photoreduction system that is used to selectively generate an optical presentation of a preselected serial number replicated a plurality of times on the computer display terminal, optically reduce the optical presentation directly to a photographic film, and cut the film into a plurality of tag particles with each tag particle containing at least one complete serial number.

These and other objects and features of the present invention will become more readily apparent from the following description in which preferred and other embodiments of the invention have been set forth in conjunction with the accompanying drawing and appended claims.
Figure 1 is a schematic, perspective illustration of a tag particle of this invention shown greatly enlarged for ease of illustration;
Figure 2 is schematic illustration of a plurality of tag particles shown in the environment of an item of personal property to demonstrate the novel tag apparatus and method of this invention;
Figure 3 is a side view a schematic of the computer, optical reduction system, and photographic film cartridge system of this invention; and
Figure 4 is a block diagram of the production system for producing the micro indicia.

The invention is best understood by the following description with reference to the drawing wherein like parts are designated by like numerals throughout.

Almost without exception, any item of personal property including camera equipment; electronic devices such as stereos, television sets, microwave ovens, personal computers, and video cameras; furniture; clothing; boats; automobiles; bicycles, to name a few, have folds, joints, or concealed areas where minute tag particles could be secreted. For example, a camera has both external and internal joints where one could releasably mount one or more tag particles without interfering with either the operation or the aesthetic appearance of the camera. The tag particles could even be placed in the seams of clothing where they would resist removal during normal cleaning operations.

The novel identification system of this invention provides a practical means of identification for an item of personal property by enabling a customer to easily select a personalized serial number and then produce a set of tag particles, each tag particle having at least one complete serial number thereon. Importantly, the computer portion of the system includes software for preventing the same serial number from being inadvertently selected by a second customer thereby preventing duplication of the same serial number by different customers. Further, each system is precoded with a system code to eliminate the necessity for networking all of the systems together thereby allowing each system to be essentially independent of all other systems.

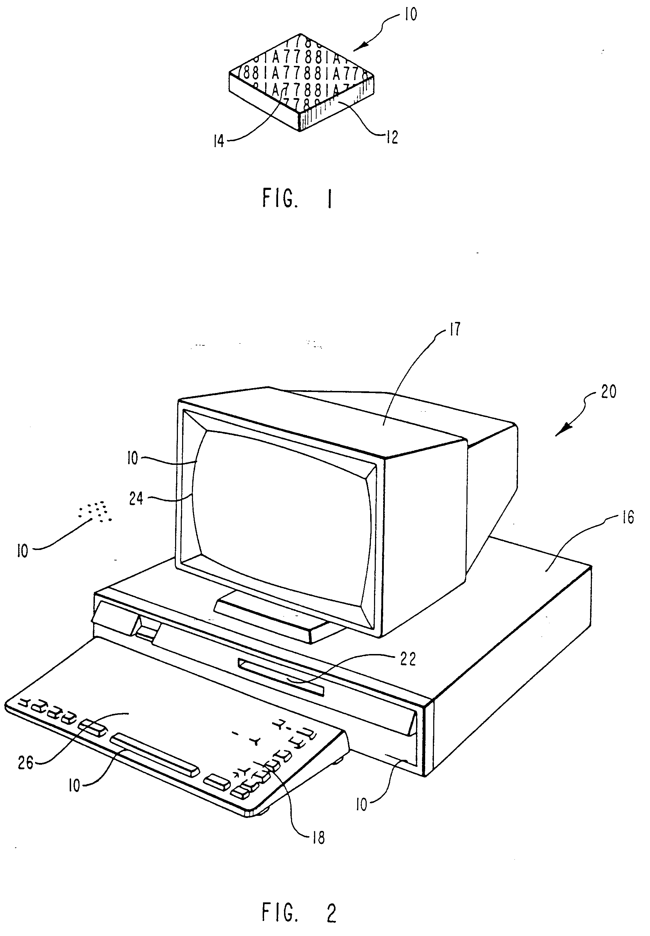

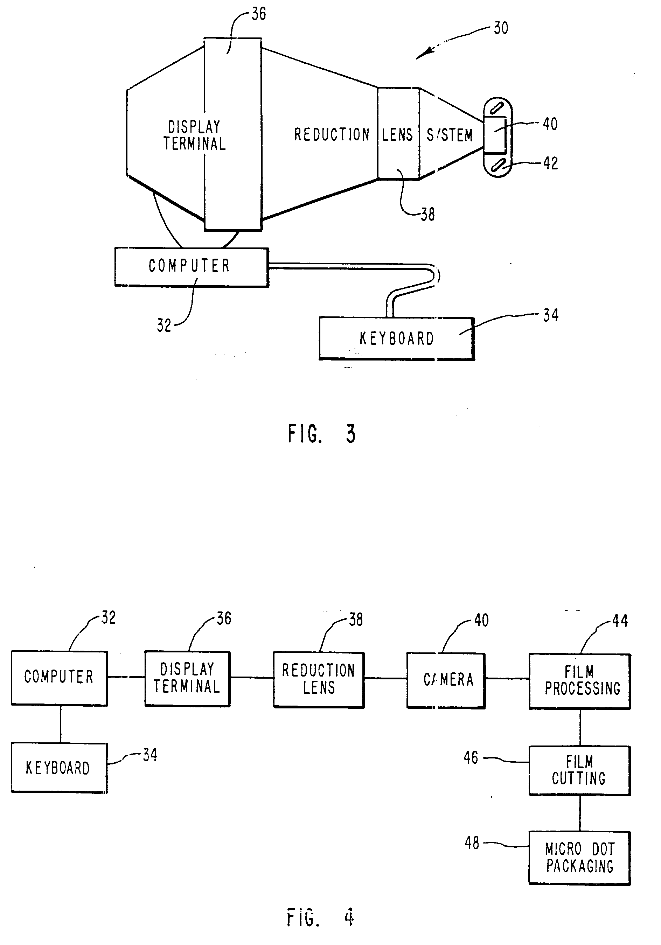

Referring now more particularly to Figure 1, the novel tag particle apparatus of this invention is shown generally at 10 and includes a substrate 12 upon which a specific serial number 14 is printed. In this case, serial number 14 is 77881A which is a combination of numerals and a letter. It is to be understood herein that the expression "serial number" used herein means a sequence of numbers or letters or a combination thereof. Clearly, an almost unlimited number of individual serial numbers can be used in the practice of this invention, as will be discussed with regard to Figure 3.

Substrate 12 is a piece of plastic material cut from a larger sheet (not shown) of plastic material upon which serial number 14 has been reproduced by using the photographic techniques described with reference to Figures 3 and 4. Conventional microfilm technology is used to photographically reduce a set of serial numbers 14 so that a small sheet (not shown) of substrate 14 contains thousands of replications of serial number 14. This technology is known in the industry as microdot technology and makes it possible whereby the text from a standard letter-size sheet of paper (8 1/2 inches x 11 inches), for example, can be reduced to the size of a printed period at the end of this sentence.

In the practice of this invention, tag particle 10 is cut to a size less than 2 millimeters across and can even be substantially smaller in size. The only practical limitation to the small size of tag particle 10 is the physical limitations of the cutter (not shown) used to cut substrate 12 into tag particle 10. Clearly, using microdot technology, there is essentially no danger of obliterating serial number 14 regardless of the small size imparted to tag particle 10.

Tag particle 10 is only one of a plurality of tag particles which are provided in bulk quantities which contain several thousand tag particle 10, as illustrated schematically in Figure 2. Referring further to Figure 2, an item of personal property is shown schematically herein as a personal computer 20 consisting of a computer 16, a display terminal 17, and a key board 18. Each of these items contains various joints or openings into which tag particles 10 can be releasably secured. For example, computer 16 includes slots 22, while display terminal 17 has a joint next to screen 24. Keyboard 18 has a plurality of keys 26 (only a few of which are shown for ease of illustration) adjacent which tag particles 10 can be inserted. Additionally, substrate 12 (Figure 1) is fabricated from a nonconducting plastic material so that tag particles 10 can be mounted inside any electronic equipment without creating the danger of an electrical short circuit.

Referring now to Figure 3, the fabrication apparatus for fabricating tag particles 10 is shown generally at 30 and includes a computer 32, a keyboard 34, a display terminal 36, a reduction lens system 38 and a camera 40 to which a film cartridge 42 is attached. Computer 32 is controlled through keyboard 34 and generates a visual image of the plurality of serial number 14 (Figure 1) on display terminal 36. Advantageously, the customer (not shown) uses keyboard 34 and computer 32 to generate any preselected serial number 14 as a series of numbers, letters, or even symbols as well as combinations of the same and display it display terminal 36. Serial number 14 may include, for example, the personal Social Security Number of the customer along with any desired letter and/or symbol combination. Thus, the variety of serial numbers 14 produced by computer 32 are essentially without limit. Serial number 14 is replicated by computer a plurality of times on display terminal 36. While the terminal 36 is a cathode ray tube or television type screen a plurality of sets of the serial number 14 may be replicated and displayed thereon in matrix form.

Computer 32 is programmed using conventional programming techniques to preclude a second customer (not shown) from inadvertently selecting an identical serial number 14 that had been previously selected. Further, the data generated by computer 32 is also entered into a registry memory wherein serial number 14 is registered to the specific customer for purposes of tracking ownership of personal computer 20, for example. In this manner, the individual customer is able to mark any number of items of personal property such as, personal computer 20, with a plurality of tag particles 10, each having thereon a preselected serial number 14.

As serial number 14 (Figure 1) is displayed as a replication thereof on display terminal 36 camera 40 is activated to capture on the film in film cartridge 42 the optically reduced image thereof created by reduction lens system 38. Thereafter, the film is processed according to conventional film processing techniques after which it is cut into tag particles 10 (Figure 1) as described hereinbefore.

With reference to Figure 4, the foregoing production of tag particles 10 (Figure 1) is set forth as a flow diagram wherein the customer (not shown) uses keyboard 34 to activate computer 32. The serial number 14 generated by computer 32 can be preprogrammed or can be generated as a result of the instructions provided through keyboard 34. Further, the programming of computer 32 is such that once a particular serial number 14 has been recorded by camera 40 that particular serial number 14 is permanently locked out of computer 32 to prevent its duplication either inadvertently or deliberately. Serial number 14 can also include a second serial number (not shown) superimposed on serial number 14 on tag particle 10 to identify the particular computer apparatus 30 which is used to generate serial number 14. This second serial number (not shown) provides a system whereby each computer apparatus 30 is independent so as to eliminate any problem of inadvertent duplication of serial number 14 between different computer apparatus 30. These features are well within the normal operating capabilities of a suitable computer 32.

Reduction lens 38 is any suitable lens system operable to optically reduce the image of serial number 14 displayed on display terminal 36 directly on the film in film cartridge 42 as controlled by camera 40. Camera 40 is automatically controlled by computer 32 so as to advance film in film cartridge 42 in coordination with the change in the display of serial number 14 on display terminal 36.

The method of this invention involves a customer (not shown) entering the necessary instructions into computer 32 with keyboard 34 to cause serial number 14 to be displayed on display terminal 36. With the appropriate film loaded into film cartridge 42 and the proper lens setting made in reduction lens 38, camera 40 is activated to capture serial number 14 on the film in film cartridge 42. Advantageously, any suitable serial number 14 may be generated by computer 32 as instructed by the customer (not shown) using keyboard 34. This means that the customer (not shown) can enter the desired serial number 14 into computer 32. Further, film cartridge 42 can be readily configured as a single-use film cartridge so as to accommodate the production of a single set of tag particles 10. In effect, because of the versatility of this novel tag particle fabrication apparatus 30, it can be used to produce an extremely wide variety of serial number 14 at the specific request of the customer (not shown).

Additionally, a plurality of sets of tag particles 10 can also be fabricated in an assembly line fashion by simply providing the necessary software program to computer 32 to thereby cause the desired sequence of serial number 14 to be displayed on display terminal 36. Further, computer 32 can be programmed to operate camera 40 so that each set of serial number 14 displayed on display terminal 36 is captured on film in film cartridge 42.

The method of this invention includes selecting a particular item of personal property, in this instance personal computer 20, and dispensing throughout computer 20 a plurality of tag particles 10. For example, tag particles 10 can be selectively dispensed in the joints, crevices or openings around keys 26 on keyboard 18, floppy disc opening 22, around screen 24 on terminal 17, and in other joints or crevices on hard drive 16. Further, tag particles 10 can be placed at numerous locations inside each of the items at the discretion of the operator (not shown).

If desired, tag particles 10 can be adhesively mounted at selected locations 22, 24, and 26 by the application of an adhesive so as to more securely mount tag particles 10 to personal computer 20. Clearly, any suitable adhesive may be used for this procedure.

Tag particles 10 can also be dispersed loosely inside personal computer 20 so as to allow a few to fall out and thus leave a trail of tag particles 10 along the path of movement and placement of personal computer 20. This means that any person knowingly receiving personal computer 20 as stolen goods could be implicated by the presence of even only one of tag particles 10 on the premises or in a vehicle used to transport personal computer 20. A law enforcement agency need only collect tag particles 10 using a vacuum system (not shown) and then read serial number 14 to be able to identify the ownership of personal computer 20 even though personal computer 20 is no longer in the vicinity.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. An apparatus for enabling a user to mark an item of personal property with a plurality of tag particles characterised by:
computer means for generating a serial number for said tag particles;
input means operable by said user to selectively predetermine said serial number;
display terminal means for displaying said serial number generated by said computer means;
reduction lens means for optically reducing said serial number displayed on said display terminal means;
camera means for capturing said optically reduced serial number on film;
film processing means for fixing said serial number on said film;
cutting means for cutting said film into a plurality of said tag particles; and
applicator means for applying said tag particles to said item of personal property to thereby mark said item of personal property.

2. The apparatus claimed in claim 1 characterised in that said tag particles comprise a substrate upon which said serial number is produced in multiples with a size incrementally smaller than said tag particle so as to mark each tag particle with at least one complete set of said serial number.

3. The apparatus claimed in claim 1 or 2 characterised in that said plurality of tag particles comprises adhesive means for adhesively securing said tag particles to said item of personal property.

4. The apparatus claimed in claim 2 or 3 characterised in that said tag particle is less than two millimeters across.

5. The apparatus claimed in any one of the preceding claims characterised in that said tag particles are fabricated from a nonconductive elastomeric material.

6. The apparatus claimed in any one of the preceding claims characterised in that said input means comprises a keyboard for entering said predetermined serial number into said computer means with said display terminal means displaying said serial number.

7. The apparatus claimed in any one of the preceding claims characterised by computer means arranged to create a series of sets of the selected serial numbers for the display of a plurality of such sets on the display termainal means.

8. The apparatus claimed in claim 7 characterised in that the display terminal means is a television type screen, or cathode ray tube.

9. An apparatus for enabling a user to mark an item of personal property with a preselected serial number characterised by:
computer means for generating a serial number;
input means for enabling said user to selectively predetermine said serial number;
display terminal means for displaying said serial number generated by said computer means as a set of identical serial numbers;
reduction lens means for optically reducing said set of serial numbers displayed on said display terminal means;
camera means for capturing said optically reduced set of serial numbers on film;
film processing means for fixing said set of serial numbers on said film and cutting said film into a plurality of tag particles, said tag particles being less than about two millimeters in size with at least one complete serial number on each of said tag particles; and
attachment means for securing said tag particles at a plurality of discrete locations on said item of personal property to thereby provide identification of said item of personal property.

10. The apparatus claimed in claim 9 characterised in that said tag particles are fabricated from a nonconductive elastomeric material.

11. A method for enabling a user to mark an item of personal property with an identification tag set having a serial number selected by said user characterised by:
obtaining a computer means operable to generate a serial number;
providing the user with an input means thereby allowing said user to preselect a serial number, and said computer means generating said serial number as a set of indicia comprising a plurality of identical series of said serial number;
displaying said set of indicia on a display terminal of said computer means;
optically reducing said set of indicia to produce a miniature of said set of indicia;
photographically capturing said miniature on film;
developing said film;
cutting said film into said tag set comprising a plurality of tag particles, each of said tag particles having at least one complete serial number; and.
marking said item of personal property by applying a plurality of said tag particles to said item of personal property.

12. The method claimed in claim 11 characterised in that said providing step comprises choosing said serial number from a preselected arrangement of numbers, letters, and symbols.

13. The method claimed in claim 11 or 12 characterised in that computer means creates a series of sets of the selected serial numbers for display of a plurality of such sets on the display terminal means.

14. The method claimed in claim 13 characterised in that the plurality of sets of the selected serial numbers are displayed in a matrix display form on the display terminal means.

15. The method claimed in claim 13 or 14 wherein the plurality of sets of the selected serial numbers are displayed on a television type screen or cathode ray tube.
